(19) Europäisches Patentamt
European Patent Office
Office européen des brevets

(11) EP 0 840 862 B1

(12) **EUROPEAN PATENT SPECIFICATION**

(45) Date of publication and mention
of the grant of the patent:
**13.10.1999 Bulletin 1999/41**

(21) Application number: **96924207.2**

(22) Date of filing: **18.07.1996**

(51) Int Cl.6: **F16H 1/12**

(86) International application number:
**PCT/NL96/00291**

(87) International publication number:
**WO 97/04248 (06.02.1997 Gazette 1997/07)**

(54) **GEAR TRANSMISSION WITH NON-PARALLEL AXES**

**ZAHNRADGETRIEBE MIT NICHT-PARALLELEN WELLEN**

**TRANSMISSION PAR ENGRENAGES COMPORTANT DES AXES NON PARALLELES**

(84) Designated Contracting States:
**DE FR GB NL**

(30) Priority: **21.07.1995 NL 1000866**

(43) Date of publication of application:
**13.05.1998 Bulletin 1998/20**

(73) Proprietor: **CROWN GEAR B.V.**
**7544 RG Enschede (NL)**

(72) Inventor: **UITTENBOGAART, Gustaaf, Adolf**
**NL-2051 HD Overveen (NL)**

(74) Representative:
**Iemenschot, Johannes Andreas, Ir. et al**
**van Exter Polak & Charlouis B.V.,**
**P.O. Box 3241**
**2280 GE Rijswijk (NL)**

(56) References cited:
**DE-A- 2 751 360          US-A- 2 570 151**
**US-A- 4 329 886**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a gear transmission as specified in the preamble of claim 1.

Gear transmissions of this kind are disclosed, inter alia, by US-4329886, in which a gear transmission is shown, the shafts of which are perpendicular to one another. The face gear of the gear transmission is fastened so as to be displaceable on a shaft and the element with the smooth surface is likewise fastened so as to be displaceable on this shaft. The adjustment of the two gears with respect to one another is carried out by sliding the element along the shaft.

The adjustment of the gear transmission of the known device is of minor importance, since it is used in a structure which is subject to low loads, but it becomes extremely important in structures subjected to heavier loads in order to be able to obtain a good bearing picture over the entire tooth width during operation and, as a result, sufficient bearing capacity. In the known gear transmission, the facilities to achieve the latter are insufficient, since it was not realized that the construction used could also be employed in gear transmissions subjected to heavier loads. The absorption of the high lateral thrusts occurring, by which the face gear and the pinion are pushed apart, has to be accompanied by an accurate positioning of the gears with respect to one another, which is not sufficiently ensured with the known design.

The invention aims to make it possible to adjust the gears in a simple manner, as a result of which the transmission can be subjected to heavier loads. To this end, the smooth surface facing the face gear is fastened so as to be adjustable in the direction of the second shaft with respect to the face gear.

By making it possible to set the distance between the face gear and the smooth surface accurately, the cylindrical pinion can be adjusted accurately with respect to the face gear without this adjustment being complicated by the adjustment of the face gear and/or the cylindrical pinion with respect to the housing.

According to a preferred embodiment of the invention, the length of the common line of the cylindrical surface and the smooth surface is shorter than the width of the pinion.

Limiting the length of the common line makes it possible to achieve a compact design, which can save on costs.

According to a further preferred embodiment of the invention, the cylindrical pinion, the face gear, the cylindrical surface of the first shaft and the surface facing the face gear have an essentially identical hardness.

By giving an identical hardness to these components, they can be produced easily, while the stresses occurring in the material will be of approximately equal magnitude. As a result, the service life of all the components is approximately equal while the costs remain limited.

According to a further improvement of the invention, the product of the width and the diameter of the cylindrical surface is at least 10-20% of the product of the width and the diameter of the cylindrical pinion.

As a result, the stresses occuring in the contact face between the cylindrical surface and the smooth surface of the element are no greater than the stress occurring in the contact face between the teeth of the cylindrical pinion and the face gear.

According to a further improvement of the invention, the cylindrical surface of the first shaft and/or the smooth suface of the element are of a slightly convex design.

As a result, the adjustment of the two shafts with respect to one another is less critical, and bearing is avoided at the face where linear contact changes to punctiform contact. As a result, the load can remain higher.

The invention is explained in the following description of a few exemplary embodiments with reference to a drawing, in which:

Figure 1 shows part of a cross section through a parting plane of a gearbox with a gear transmission according to a first embodiment of the invention.

Figure 2 shows a gear transmission according to a second embodiment of the invention.

Figure 3 shows a gear transmission according to a third embodiment of the invention.

Figure 4 shows a gear transmission according to a fourth embodiment of the invention.

In the various figures, corresponding components are always provided with corresponding reference numerals.

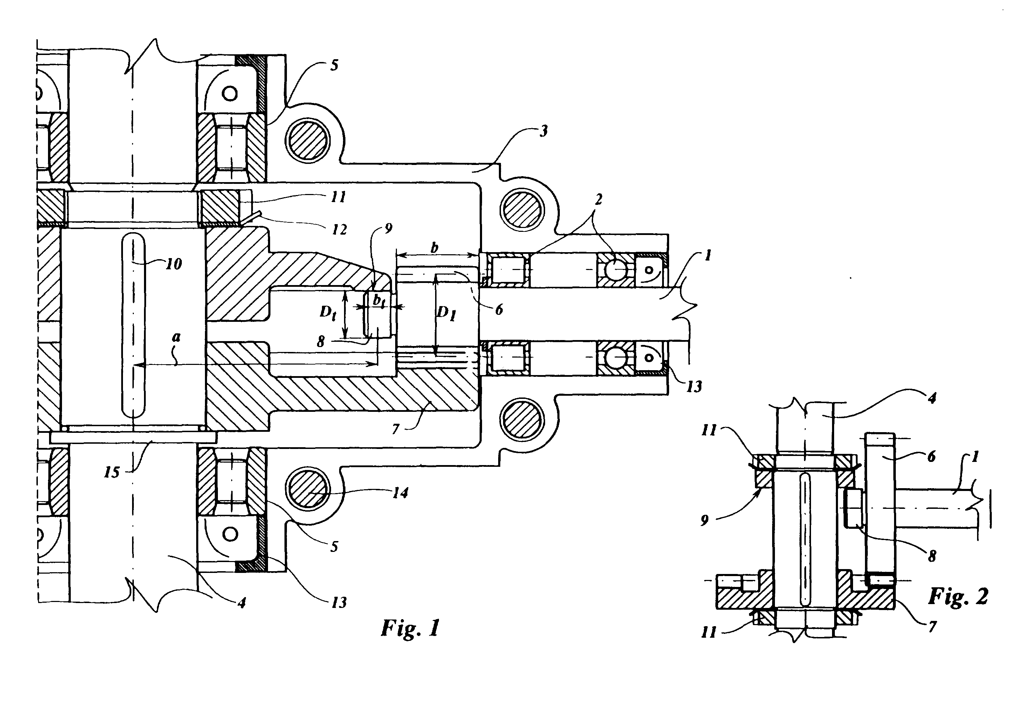

Figure 1 shows part of a cross section through the parting plane of a gearbox in which a first embodiment of the gear transmission according to the invention is fitted.

A first shaft 1 is rotatably supported in a housing 3 by means of bearings 2. A second shaft 4 is rotatably supported in the housing by means of bearing 5, the two axes of rotation forming an angle with one another.

A cylindrical pinion 6 is fastened on the first shaft 1 and, on the side of the pinion 6 facing the second shaft 4, a portion having a smooth cylindrical surface 8 is fixedly connected to the first shaft 1.

The pinion 6 is in engagement with a face gear 7 which has approximately six times as many teeth as the pinion 6 and which is fastened on the second shaft 4, the face gear 7 being prevented from rotating with respect to the second shaft 4 by means of a key mounted in a key way 10.

A disc-shaped element with a smooth surface 9 is fastened on the second shaft 4, the smooth surface 9 bearing against the smooth cylindrical surface 8 and having a common line with this surface 8, which line runs parallel to the axis of rotation of the first shaft 1. As a result, it is possible for the first shaft 1 to move towards and away from the second shaft 4 without any change resulting in the engagement between the pinion 6 and the face gear 7 and without any axial displacement of the second shaft 4 occurring.

The movement of the face gear 7 with respect to the second shaft 4 is limited in an axial direction by a shoulder 15, and the disc-shaped element with the smooth surface 9 is limited in the opposite direction by a shaft nut 11. The shaft nut 11 can be locked using a locking ring 12. By moving the smooth surface 9 with respect to the face gear 7, it is possible to alter the engagement between face gear 7 and pinion 6 and to set the tooth clearance.

When the teeth of the pinion 6 and the face gear 7 are in engagement with one another, a tooth force causes a Hertzian stress $\sigma_{Htooth}$ in the surface of the tooth flanks, which stress is dependent on a tooth width b and a pinion diameter $D_1$, and a Hertzian stress $\sigma_{Hcyl}$ in the smooth cylindrical surface 8 and the smooth surface 9, which stress is dependent on a contact width $b_t$ and a diameter $D_t$ of the cylindrical surface. For the Hertzian stresses occurring as a result of the tooth force the following relation with the dimensions applies :

$$(\sigma_{Htooth}/\sigma_{Hcyl})^2 = (0.10 ... 0.20) * (b * D_1) / (b_t * D_t)$$

The values for the permissible stress are taken to be those which are customary in the gear industry. In this case, the material of the smooth cylindrical surface 8 connected to the first shaft is generally identical to the material of the pinion 6. The material of the element and the hardness of the smooth surface 9 can then be selected such that the Hertzian stresses occurring are identical on the tooth flank and the smooth cylindrical surface 8.

It is assumed here that there is a comparable state of lubrication between the tooth flanks and between the smooth cylindrical surface 8 and the smooth surface 9. This is acceptable if the build-up of the lubricating film is comparable. This applies to those points of the cylindrical surface 8 where a distance a to the axis of rotation of the second shaft 4 divided by half the diameter $D_1$ is not equal to the number of teeth of the face gear 7 divided by the number of teeth of the pinion 6.

The gearbox is constructed from two halves 3 which are fastened to one another by means of bolts 14. The bushings for the shafts are sealed using seals 13.

The bearing 2 of the first shaft 1 is loaded in the axial direction if the pinion 6 is designed with helical toothing, and in other cases the tooth force causes no loading.

The bearing 5 of the second shaft 4 is not loaded in the axial direction by the tooth force, therefore the bearings only have to be suitable for the axial loads which are exerted on the second shaft by components situated outside the gearbox.

Figure 2 shows a second embodiment, in which the number of teeth of the face gear 7 is approximately 1.5 times the number of teeth of the pinion 6. As a result, the width of the pinion 6 is small with respect to its diameter. The face gear 7 and the surface 9 can be moved in the axial direction with respect to the second shaft 4 and thus also with respect to one another by means of the shaft nuts 11.

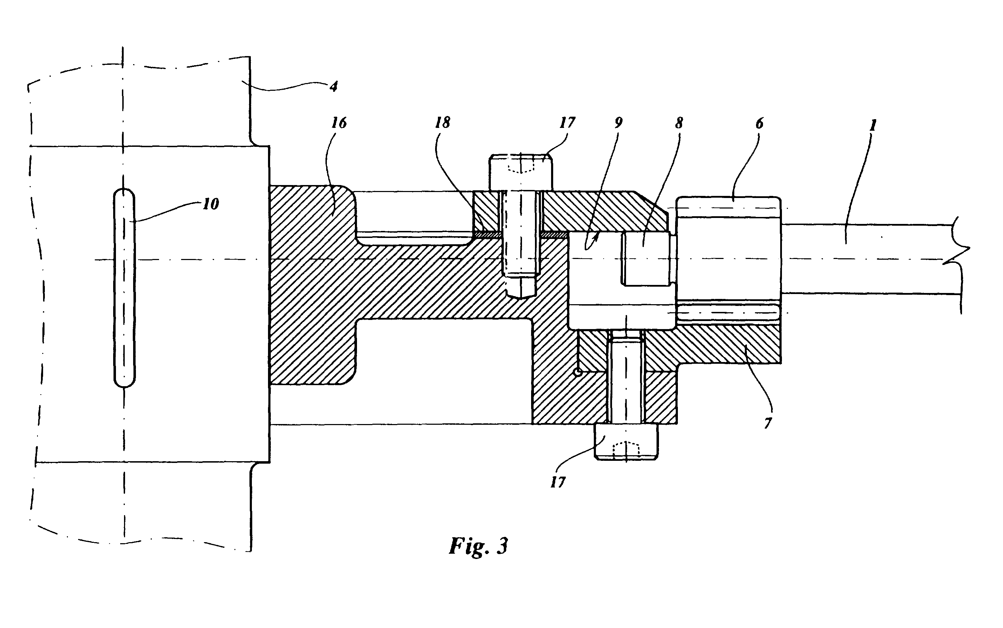

Figure 3 shows a third embodiment of the gear transmission according to the invention. In this case, the face gear 7, which has approximately 10 times as many teeth as the pinion 6, is fastened on a shaft body 16 with the aid of bolts 17. The disc-shaped element with the surface 9 is also fastened to this shaft body 16 by bolts 17. The distance between the surface 9 and the face gear 7 can be set using a filler plate 18.

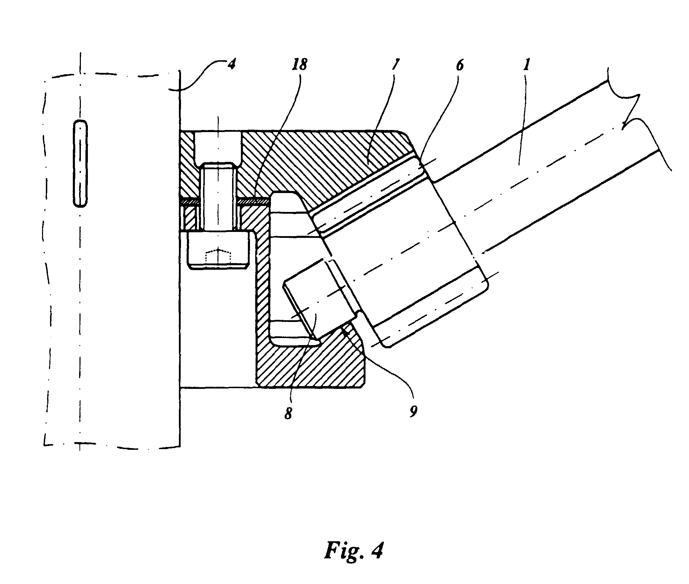

Figure 4 shows a fourth embodiment of the gear transmission according to the invention. Here, the shaft angle between the first shaft 1 and the second shaft 4 is not equal to 90°, and in this case is approximately 60°.

In order to make the gear transmission less sensitive to inaccuracies in the alignment of the shafts with respect to one another, the surfaces of the cylindrical surface 8 and/or optionally also of the surface 9 can be of slightly convex design. This prevents the linear contact between these faces from turning into side bearing when there are alignment faults and excessively high stresses occurring. By designing the faces to be slightly convex, the initial contact point can be located in the centre of the faces, the contact point growing to form a contact line under the influence of elastic deformations when subjected to higher loads.

The invention is not limited to embodiments with cylindrical pinions 6, but can also be used with conical pinions. The diameter $D_t$ of the cylindrical surface 8 which is possible in this case will, however, limit the possible loading, and careful dimensioning will be necessary to achieve the desired state of lubrication.

## Claims

1. Gear transmission comprising a rotatable first shaft (1) provided with a cylindrical pinion (6) and a rotatable second shaft (4) provided with face gear (7), the first and the second shafts forming an angle with one another and the cylindrical pinion and the face gear being in engagement, the first shaft being provided with a smooth cylindrical surface (8) on the side of the cylindrical pinion which faces the second shaft and the second shaft being provided with an element having a smooth surface (9) facing the face gear, which surface has a common line, parallel to the first shaft, with the side of the cylindrical surface which is remote from the face gear, characterized in that the product of the width and the diameter of the cylindrical surface (8) is at least 10-20% of the product of the width and the diameter of the cylindrical pinion (6).

2. Gear transmission according to claim 1, characterized in that the length of the common line of the cylindrical surface (8) and the smooth surface (9) is shorter than the width of the pinion (6).

3. Gear transmission according to claim 1 or 2, characterized in that the cylindrical pinion (6), the face gear (7), the cylindrical surface (8) of the first shaft (1) and the surface (9) facing the face gear have an essentially identical hardness.

4. Gear transmission according to one or more of the preceding claims, characterized in that the cylindrical surface of the first shaft and/or the smooth surface of the element are of a slightly convex design.

**Patentansprüche**

1. Zahnradgetriebe, umfassend eine drehbare erste Welle (1), die mit einem zylindrischen Ritzel (6) versehen ist, und eine drehbare zweite Welle, die mit einem Kronrad (7) versehen ist, wobei die erste und die zweite Welle einen Winkel miteinander einschließen und das zylindrische Ritzel und das Kronrad im Eingriff stehen, wobei die erste Welle auf der Seite des zylindrischen Ritzels, die der zweiten Welle zugewandt ist, mit einer glatten zylindrischen Oberfläche (8) versehen ist, und die zweite Welle mit einem Element versehen ist, das eine dem Kronrad zugewandte glatte Oberfläche (9) aufweist, welche Oberfläche eine zur ersten Welle parallele gemeinsame Linie mit derjenigen Seite der zylindrischen Oberfläche aufweist, die von dem Kronrad entfernt ist, dadurch gekennzeichnet, daß das Produkt aus der Breite und dem Durchmesser der zylindrischen Oberfläche (8) mindestens 10-20% des Produkts aus der Breite und dem Durchmesser des zylindrischen Ritzels (6) beträgt.

2. Zahnradgetriebe nach Anspruch 1, dadurch gekennzeichnet, daß die Länge der gemeinsamen Linie der zylindrischen Oberfläche (8) und der glatten Oberfläche (9) kürzer ist als die Breite des Ritzels (6).

3. Zahnradgetriebe nach Anspruch 1 oder 2, dadurch gekennzeichnet, daß das zylindrische Ritzel 6, das Kronrad (7), die zylindrische oberfläche (8) der ersten Welle (1) und die dem Kronrad zugewandte Oberfläche (9) eine im wesentlichen identische Härte aufweisen.

4. Zahnradgetriebe nach einem oder mehreren der vorangehenden Ansprüche, dadurch gekennzeichnet, daß die zylindrische Oberfläche der ersten Welle und/oder die glatte Oberfläche des Elements von einer leicht konvexen Gestalt sind.

**Revendications**

1. Transmission par engrenages comprenant un premier arbre (1) rotatif comportant un pignon cylindrique (6) et un second arbre (4) rotatif comportant un engrenage en couronne (7), les premier et second arbres formant un angle l'un par rapport à l'autre, et le pignon cylindrique et l'engrenage en couronne étant engrenés, le premier arbre présentant une surface cylindrique lisse (8) du côté du pignon cylindrique qui est en regard du second arbre et le second arbre comportant un élément présentant une surface lisse (9) en regard de l'engrenage en couronne, laquelle surface présente une ligne commune, parallèle au premier arbre, avec la face de la surface cylindrique qui est éloignée de l'engrenage en couronne, caractérisée en ce que le produit de la largeur et du diamètre de la surface cylindrique (8) représente au moins de 10 à 20 % du produit de la largeur et du diamètre du pignon cylindrique (6).

2. Transmission par engrenages selon la revendication 1, caractérisée en ce que la longueur de la ligne commune de la surface cylindrique (8) et de la surface lisse (9) est inférieure à la largeur du pignon (6).

3. Transmission par pignon selon la revendication 1 ou 2, caractérisée en ce que le pignon cylindrique (6), l'engrenage en couronne (7), la surface cylindrique (8) du premier arbre (1) et la surface (9) en regard de l'engrenage en couronne présentent une dureté sensiblement identique.

4. Transmission selon l'une ou plusieurs des revendications précédentes, caractérisée en ce que la surface cylindrique du premier arbre et/ou la surface lisse de l'élément présentent une forme sensiblement convexe.

EP 0 840 862 B1

*Fig. 2*

*Fig. 1*

5

*Fig. 3*

*Fig. 4*